# EUROPEAN PATENT SPECIFICATION

(11) **EP 2 898 134 B1**
(45) Date of publication and mention of the grant of the patent: **10.04.2019**
(21) Application number: 13756505.7
(22) Date of filing: 04.09.2013
(51) Int. Cl.: D06F 58/28, D06F 25/00, D06F 58/24

(54) **A LAUNDRY WASHING AND DRYING MACHINE**
EIN WASCH- UND TROCKNUNGSMASCHINE FÜR WÄSCHE
MACHINE À LAVER ET À SÉCHER LE LINGE

(30) Priority: 24.09.2012 TR 201210869
(43) Date of publication of application: 29.07.2015
(73) Proprietor: Arçelik Anonim Sirketi, 34950 Istanbul (TR)
(72) Inventor: KASAP, Fatih, 34950 Istanbul (TR); TOP, Ahmet, Burak, 34950 Istanbul (TR); CAGLAR, Talip, 34950 Istanbul (TR); TATAR, Hakan, 34950 Istanbul (TR)
(86) International application number: PCT/EP2013/068308
(87) International publication number: WO 2014/044533

(56) References cited:
- EP-A1- 1 408 151
- EP-A1- 1 700 944
- EP-A1- 1 925 714
- DE-A1- 3 412 284
- JP-A- 2002 360 972
- US-A1- 2009 320 319

## Description

The present invention relates to a laundry washing and drying machine wherein energy saving is provided during the drying process.

In laundry washing and drying machines, the laundry is placed into the drum moving in a tub and the drying process is realized after the washing and spin-drying processes. In the drying process, the processing air heated by the heater and dehumidified by means of an air-cooled condenser is passed over the laundry in the drum in a hot and dry manner by applying a closed air circulation cycle. The laundry drying process starts with a preheating phase and the hot air is sent onto the laundry by operating the heater and the processing air fan. In the preheating phase, the temperature of the laundry is increased in order to prepare for the drying process. After the preheating phase, the thermal spin phase is realized wherein the drum is rotated at high speeds. The thermal spin phase is not different from the known post-washing spin-drying process in terms of drum rotational speed and the laundry heated by performing preheating is provided to be dehumidified with the effect of the centrifugal force in the high-speed drum. In the thermal spin, the pores of the preheated laundry open up and the laundry is more easily dehumidified. The problem which can be encountered while performing the thermal spin phase is that the laundry cools down again. The heater is continuously operated during the preheating phase and the laundry is heated by consuming a significant amount of energy. In the thermal spin phase, the preheated laundry loses their heat due to the high speed of the drum. For this reason, the laundry is required to be heated once more before the main drying phase, and the operation time of the heater and hence the energy consumption increase.

In the European Patent No. EP1408151, a clothes dryer and method for controlling operation thereof are disclosed.

In the German Patent Application No. DE3412284, the method for operating a condensation laundry drier is disclosed.

In the Japanese Patent Application No. JP2002-360972A, a laundry washing and drying machine is disclosed, wherein the laundry drying process comprises a preheating phase, a main drying phase and a cooling phase.

The aim of the present invention is the realization of a laundry washing and drying machine wherein the energy consumption is decreased by shortening the drying process after the washing process.

In the laundry washing and drying machine realized in order to attain the aim of the present invention, explicated in the first claim and the respective claims thereof, in the drying process after the washing process, the preheating phase, the thermal spin phase, the main drying phase and the cooling phase are respectively realized.

The condenser is of air-cooled type and cooled with the air received from the outer environment by means of a cooling fan, thus condensing the processing air. The temperature of the processing air is measured by a temperature sensor.

In the drying process and at the beginning of the main drying phase following the thermal spin phase, the control unit does not operate the cooling fan until the processing air temperature reaches a predetermined drying temperature, thus the laundry cooling down in the thermal spin phase is provided to be quickly heated in the main drying phase.

In an embodiment of the present invention, the control unit stops the operation of the cooling fan before the thermal spin phase, towards the end of the preheating phase or during the entire preheating phase, thus providing the quick-heating of the laundry before the thermal spin process. The thermal spin process is realized at high temperatures and the amount of moisture removed from the laundry is increased.

In the laundry washing and drying machine of the present invention, the total duration of the drying process is shortened and energy saving is provided by stopping the operation of the condenser cooling fan during the thermal spin process and before and after the thermal spin process.

The laundry washing and drying machine realized in order to attain the aim of the present invention is illustrated in the attached figures, where:

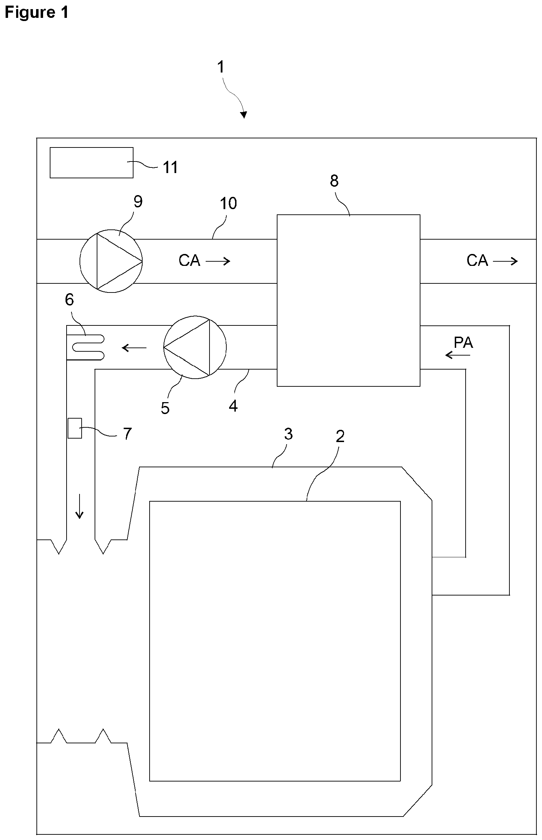

Figure 1 - is the schematic view of a laundry washing and drying machine.
Figure 2 - is the graphic showing the phases performed in the drying process and the change in the processing air temperature with respect to time in a laundry washing and drying machine.

The elements illustrated in the figures are numbered as follows:
1. Laundry washing and drying machine
2. Drum
3. Tub
4. Circulation duct
5. Process fan
6. Heater
7. Temperature sensor
8. Condenser
9. Cooling fan
10. Cooling channel
11. Control unit

The laundry washing and drying machine (1) comprises a drum (2) wherein the laundry is placed, a tub (3) wherein the drum (2) moves, a circulation duct (4) wherein the processing air (PA) circulation, providing the drying of the laundry, is performed in the drying process after the washing process, a process fan (5) that provides circulation of the processing air (PA), a heater (6) disposed in the circulation duct (4), a temperature sensor (7) disposed in the circulation duct (4) and measuring the processing air (PA) temperature, an air-cooled condenser (8) disposed in the circulation duct (4), that condenses the processing air (PA), a cooling fan (9) and a cooling channel (10) that cool the condenser (8) by delivering the cooling air (CA) sucked from the outside environment to the condenser (8) and thereby enable the condenser (8) to condense the processing air (PA) and a control unit (11) that regulates the washing and drying processes.

In the laundry washing and drying machine (1), after the washing process the laundry drying process is realized by performing the preheating phase (I), the thermal spin phase (II), the main drying phase (III) and the cooling phase (IV) respectively.

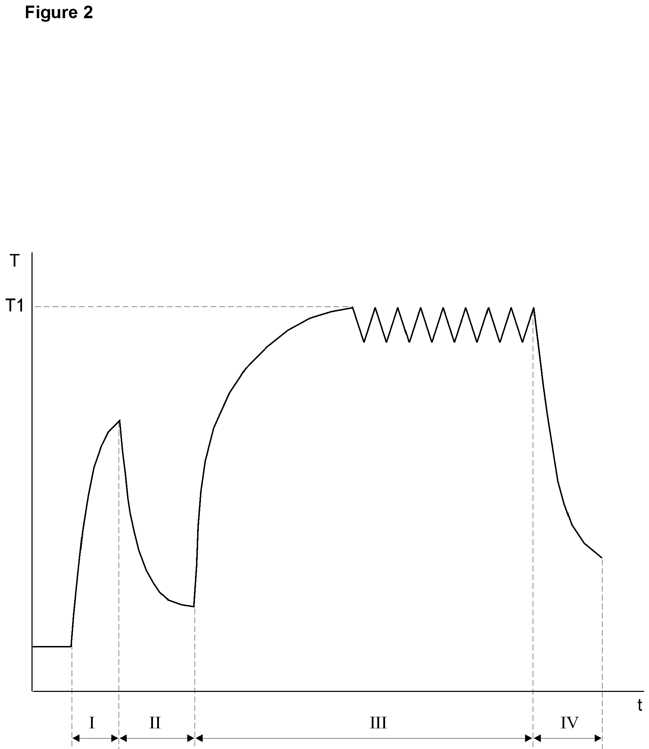

By operating the heater (6) and the process fan (5) in the preheating phase (I), the temperature of the laundry is increased before the thermal spin phase (II). In the thermal spin phase (II) the laundry is spin-dried by rotating the drum (2) at high speeds, for example 1500 rpm and the moisture in the laundry with pores being opened up by being heated in the preheating phase (I) is provided to be partially removed. In the thermal spin phase (II) the moisture of the laundry is removed with the effect of centrifugal force by operating only the drum (2) motor, but the heater (6), the process fan (5) and the cooling fan (9) are not operated. In the main drying phase (III), the heater (6), the process fan (5) and the cooling fan (9) are operated. The processing air (PA) becomes humid while passing over the laundry, is dehumidified in the condenser (8) cooled with the cooling air (CA) and is once more sent onto the laundry after being heated by the heater (6). In the cooling phase (IV) after the main drying phase (III), the heater (6) is deactivated, and the laundry is aired and cooled by operating the process fan (5) and the cooling fan (9). Before the preheating phase (I) during the drying process, the load detection and laundry distribution phases (not shown in the graphic in Figure 2) are also performed. During the cooling phase (IV), the condenser (8) washing process is performed as well and fibers and lint are cleansed.

The laundry washing and drying machine (1) of the present invention comprises the control unit (11) that delays the operation of the cooling fan (9) until the processing air (PA) temperature detected by the temperature sensor (7) reaches the temperature value (T1) predetermined and recorded in the memory thereof at the beginning of the main drying phase (III) following the thermal spin phase (II).

In the laundry washing and drying machine (1), the temperature of the laundry decreases in the thermal spin phase (II) and in order to dry the laundry in the desired efficiency in the main drying phase (III), the laundry is required to be heated again. In the main drying phase (III) following the thermal spin phase (II), the processing air (PA) temperature is measured by the temperature sensor (7) and the control unit (11) delays the operation of the cooling fan (9) until the measured processing air (PA) temperature reaches the temperate value (T1) predetermined and recorded in the memory thereof. In the period the cooling fan (9) is not operating, no heat change occurs in the condenser (8). Thus, the laundry heated in the preheating phase (I), but losing their heat in the thermal spin phase (II) is quickly heated again, and the cooling fan (9) and hence the condenser (8) are activated when the laundry reaches the temperature required for the main drying phase (III).

In an embodiment of the present invention, the control unit (11) stops the operation of the cooling fan (9) for a predetermined period of time before the thermal spin phase (II) and towards the end of the preheating phase (I). Thus, the temperature of the laundry is provided to be quickly increased before the thermal spin phase (II).

In the laundry washing and drying machine (1), the control unit (11) deactivates the cooling fan (9) before the thermal spin phase (II) and towards the end of the preheating phase (I), and moreover the time spent for the laundry to heat up shortens since the laundry is not cooled by the condenser (8). Thus, the laundry is prepared for the thermal spin phase (II) and the amount of moisture removed from the laundry in the thermal spin phase (II) is increased.

In another embodiment of the present invention, the control unit (11) stops the operation of the cooling fan (9) along the preheating phase (I). Consequently, the temperature of the laundry is provided to be increased by quickly performing the preheating phase (I) and energy consumption is decreased.

In the laundry washing and drying machine (1), the operation of the cooling fan (9) is stopped during the thermal spin phase (II), before the thermal spin phase (II) and after the thermal spin phase (II) in the drying process after the washing process. The temperature of the laundry is quickly increased before the thermal spin phase (II), amount of energy consumed in the preheating phase (I) is decreased and the amount of moisture removed from the laundry in the thermal spin phase (II) is increased. The operation of the cooling fan (9) is delayed for a period of time in the main drying phase (III) after the thermal spin phase (II), the laundry is quickly heated and the duration of the main drying phase (III) is shortened. The total duration of the drying process after the washing process is shortened, thus providing energy saving.

It is to be understood that the present invention is not limited by the embodiments disclosed above and a person skilled in the art can easily introduce different embodiments. These should be considered within the scope of the protection postulated by the claims of the present invention.

## Claims

1. A laundry washing and drying machine (1) comprising a drum (2) for placing laundry therein, a tub (3) wherein the drum (2) is configured to move, a circulation duct (4) wherein the processing air (PA) circulation is performed, a process fan (5) for providing circulation of the processing air (PA),
a heater (6),
a temperature sensor (7) measuring the processing air (PA) temperature, an air-cooled condenser (8) disposed in the circulation duct (4),
a cooling fan (9) and a cooling channel (10) configured to that cool the condenser (8) by delivering the cooling air (CA) sucked from the outside environment to the condenser (8) and
a control unit (11) configured to regulate a laundry drying process to be realised by performing a preheating phase (I), then a thermal spin phase (II), then a main drying phase (III), and then a cooling phase (IV),
**characterized in that**
the control unit (11) is configured to regulate the laundry drying process so that:
- the heater (6) and the process fan (5) are operated in the preheating phase (I) to increase the temperature of the laundry before the thermal spin phase (II);
- the laundry is spin-dried while the heater (6), the process fan (5), and the cooling fan (9) are not operated during the thermal spin phase (II); and that the control unit (11) is configured to delay the operation of the cooling fan (9) until the processing air (PA) temperature detected by the temperature sensor (7) reaches the temperature value (T1) predetermined and recorded in the memory thereof at the beginning of the main drying phase (III) following the thermal spin phase (II).

2. A laundry washing and drying machine (1) as in Claim 1, **characterized in that** the control unit (11) is configured to stop the operation of the cooling fan (9) for a constant, predetermined period of time before the thermal spin phase (II) and towards the end of the preheating phase (I).

3. A laundry washing and drying machine (1) as in Claim 1, **characterized in that** the control unit (11) is configured to stop the operation of the cooling fan (9) along the preheating phase (I).

## Patentansprüche

1. Eine Wasch- und Trockenmaschine (1) umfasst,
eine Trommel (2) für das Einlegen von Wäsche,
eine Wanne (3), in der die Trommel (2) für die Bewegung konfiguriert ist, einen Zirkulationskanal (4), in dem die Prozessluft (PA) -Zirkulation durchgeführt wird,
einen Prozessventilator (5) für die Bereitstellung einer Zirkulation der Prozessluft (PA),
einen Heizer (6),
einen Temperatursensor (7), für das Messen der Temperatur der Prozessluft (PA),
einen luftgekühlten Kondensator (8), der in dem Zirkulationskanal (4) angeordnet ist,
ein Kühlgebläse (9) und einen Kühlkanal (10), die konfiguriert sind für das Kühlen des Kondensators (8), indem die von der Außenumgebung angesaugte Kühlluft (CA) dem Kondensator (8) zugeführt wird und
eine Steuereinheit (11), die konfiguriert ist, um einen Wäschetrocknungsprozess zu regulieren, der durch Ausführen einer Vorheizphase (I), dann einer thermischen Spinphase (II), dann einer Haupttrocknungsphase (III) und dann einer Abkühlphase (IV) bedarf und
**dadurch gekennzeichnet ist,**
**dass** die Steuereinheit (11) so konfiguriert ist, dass der Wäschetrocknungsprozess so geregelt wird, dass:
- der Heizer (6) und der Prozesslüfter (5) in der Vorheizphase (I) betrieben werden, damit die Temperatur der Wäsche vor der thermischen Spinphase (II) erhöht wird;
- **dass** die Wäsche trockengeschleudert wird, während der Heizer (6), der Prozessventilator (5) und der Kühlventilator (9) nicht in der thermischen Spinphase (II) betrieben werden und das die Steuereinheit (11) konfiguriert ist, um den Betrieb des Kühlgebläses (9) zu verzögern, bis die von dem Temperatursensor (7) erfasste Prozessluft (PA) den Temperaturwert (T1) erreicht wird, der vorbestimmt ist und in dessen Speicher aufgezeichnet wird, wann der Beginn der Haupttrocknungsphase (III) nach der thermischen Spinphase (II) ist.

2. Eine Wasch- und Trockenmaschine (1), wie in Anspruch 1 erwähnt, **ist dadurch gekennzeichnet, dass** die Steuereinheit (11) konfiguriert ist, damit der Betrieb des Kühlgebläses (9) für eine konstante und vorbestimmte Zeitdauer vor der thermischen Spinphase (II) gegen Ende der Vorheizphase (I) zu stoppen.

3. Eine Wasch- und Trockenmaschine (1), wie in Anspruch 1 erwähnt, **ist dadurch gekennzeichnet, dass** die Steuereinheit (11) für den Betrieb des Kühlgebläses (9) entlang der Vorheizphase (I) zu stoppen konfiguriert ist.

## Revendications

1. Un lave-linge et sèche-linge (1), comprenant
un tambour (2) pour y placer le linge,
une cuve (3) dans laquelle le tambour (2) est configuré pour se déplacer,
un conduit de circulation (4) dans lequel la circulation de l'air de traitement (PA) est effectuée,
un ventilateur de traitement (5) pour assurer la circulation de l'air de traitement (PA),
un dispositif de chauffage (6),
une sonde de température (7) mesurant la température de l'air de traitement (PA),
un condenseur refroidi par air (8) disposé dans le conduit de circulation (4), un ventilateur de refroidissement (9) et un canal de refroidissement (10) configurés pour refroidir le condenseur (8) en délivrant l'air de refroidissement (CA) aspiré de l'environnement extérieur au condenseur (8) et
une unité de commande (11) configurée pour réguler un processus de séchage du linge à réaliser en procédant à une phase de préchauffage (I), puis une phase d'essorage thermique (II), puis une phase de séchage principal (III), et enfin une phase de refroidissement (IV),
**est caractérisé en ce que**
l'unité de commande (11) est configurée pour réguler le processus de séchage du linge de telle sorte que :
- le dispositif de chauffage (6) et le ventilateur de traitement (5) sont utilisés dans la phase de préchauffage (I) pour augmenter la température du linge avant la phase d'essorage thermique (II) ;
- le linge est essoré tandis que l'élément chauffant (6), le ventilateur de traitement (5) et le ventilateur de refroidissement (9) ne fonctionnent pas pendant la phase d'essorage thermique (II) ; et que
l'unité de commande (11) est configurée pour retarder le fonctionnement du ventilateur de refroidissement (9) jusqu'à ce que la température de l'air de traitement (PA) détectée par le capteur de température (7) atteigne la valeur de température (T1) prédéterminée et enregistrée dans sa mémoire au début de la phase principale de séchage (III) suivant la phase d'essorage thermique (II).

2. Un lave-linge et sèche-linge (1) selon la déclaration 1, **est caractérisé en ce que** l'unité de commande (11) est configurée pour arrêter le fonctionnement du ventilateur de refroidissement (9) pendant une durée constante et prédéterminée avant la phase d'essorage thermique (II) et vers la fin de la phase de préchauffage (I).

3. Un lave-linge et sèche-linge (1) selon la déclaration 1, **est caractérisé en ce que** l'unité de commande (11) est configurée pour arrêter le fonctionnement du ventilateur de refroidissement (9) pendant la phase de préchauffage (I).
